# EUROPÄISCHE PATENTANMELDUNG

(11) **EP 4 601 078 A1**
(43) Veröffentlichungstag der Anmeldung: **13.08.2025**
(21) Anmeldenummer: 25152818.8
(22) Anmeldetag: 20.01.2025
(51) Int. Cl.: H01M 10/613, H01M 10/625, H01M 10/6556, H01M 50/227, H01M 50/229, H01M 50/244, H01M 10/6567, B29C 49/00, B60L 50/64, H01M 50/231

(54) **TEMPERIERBARES BATTERIEGEHÄUSE UND HERSTELLUNGSVERFAHREN HIERVON**

(30) Priorität: 08.02.2024 DE 102024103617
(71) Anmelder: TI Automotive Technology Center GmbH, 76437 Rastatt (DE)
(72) Erfinder: Moez, Haouala, 76185 Karlsruhe (DE)
(74) Vertreter: Andrejewski - Honke Patent- und Rechtsanwälte Partnerschaft mbB

(57) **Zusammenfassung**

Ein Batteriegehäuse (1) für eine Antriebsbatterie (2) eines Fahrzeugs umfasst eine Gehäusewandung (3), wobei die Gehäusewandung (3) einen Kunststoff aufweist. Das Batteriegehäuse (1) umfasst eine Fluidleitung (4) für ein Temperiermittel. Die Fluidleitung (4) ist wenigstens zum Teil in der Gehäusewandung (3) eingebettet.

## Beschreibung

Die Erfindung betrifft ein Batteriegehäuse für eine Antriebsbatterie eines Fahrzeugs, umfassend eine Gehäusewandung, wobei die Gehäusewandung einen Kunststoff aufweist, wobei das Batteriegehäuse wenigstens eine Fluidleitung für ein Temperiermittel umfasst. Die Erfindung betrifft ferner eine Antriebsbatterie umfassend ein Batteriegehäuse sowie eine Verwendung eines Batteriegehäuses bzw. einer Antriebsbatterie. Die Erfindung betrifft schließlich ein Verfahren zur Herstellung eines Batteriegehäuses.

Die Temperierfunktion der Antriebsbatterie bzw. des Batteriegehäuses ist für Elektrofahrzeuge von großer Bedeutung, da hierdurch die Batteriezellen stets auf der für Antriebsbatterien optimalen Temperatur (etwa Raumtemperatur) gehalten werden. Dies gilt nicht nur für einen optimalen Fahrbetrieb über die Jahreszeiten hinweg und über die Temperaturentwicklung während einer Fahrt hinweg, sondern auch für den Ladevorgang. Denn bei Ladevorgängen, insbesondere bei sehr schnellen Ladevorgängen, können die Antriebsbatterien sehr warm werden. Nur durch ein leistungsstarkes Thermomanagement der Antriebsbatterie können sehr schnelle Ladevorgänge erzielt werden.

Aus der Praxis ist ein Batteriegehäuse bekannt, welches eine obere und eine untere Gehäuseschale aufweist. Die beiden Gehäuseschalen hausen eine Vielzahl von Batteriezellen, zahlreiche elektrische Verbindungen sowie einige elektronische Komponenten ein. Das Batteriegehäuse umfasst ferner eine Fluidleitung, die mäanderförmig innerhalb einer Aluminiumplatte geführt wird. Die Aluminiumplatte weist zwei aufeinander aufliegende und miteinander fest verbundene Teilplatten aus Aluminium auf, wobei wenigstens eine der beiden Teilplatten eine mäanderförmige Prägung umfasst. Die Prägung der wenigstens einen Teilplatte ergänzt sich mit der anderen Teilplatte zu der mäanderförmigen Fluidleitung innerhalb der Aluminiumplatte.

Wenigstens eine, zumeist aber mehrere Aluminiumplatten mit jeweils mindestens einer Fluidleitung werden mittels Schrauben an einer Innenseite der oberen und/oder unteren Gehäuseschale angebracht und mit Leitungsverbindern an Zuleitungen, insbesondere Sammelrohren aus Kunststoff, angeschlossen. Beispielsweise kann ein Sammelrohr als Zuleitung drei Aluminiumplatten in der unteren und drei weitere Aluminiumplatten in der oberen Gehäuseschale versorgen. Ein weiteres Sammelrohr kann die von den Batteriezellen erwärmten (oder gekühlten) Fluidströme sammeln und führt diese einem Temperierelement zu, damit das Temperierfluid dort gekühlt (oder erwärmt) wird und der Kreislauf von Neuem beginnen kann.

Allerdings ist der Aufwand zur Bereitstellung der Fluidleitung innerhalb der Antriebsbatterie recht hoch. Der Erfindung liegt daher die Aufgabe zugrunde, diesen Aufwand zu verringern. Diese Aufgabe wird gelöst durch ein

Batteriegehäuse für eine Antriebsbatterie eines Fahrzeugs, umfassend eine Gehäusewandung, wobei die Gehäusewandung einen Kunststoff aufweist, wobei das Batteriegehäuse wenigstens eine Fluidleitung für ein Temperiermittel umfasst, dadurch gekennzeichnet, dass die Fluidleitung wenigstens zum Teil in der Gehäusewandung eingebettet ist.

Der Erfindung liegt die Erkenntnis zugrunde, dass die Bereitstellung von Aluminiumplatten aufwendig ist, was vor allem die Befestigung mittels Schrauben betrifft. Insbesondere wurde gefunden, dass eine Fixierung mittels Klebstoff - u.a. aufgrund der häufigen Temperaturschwankungen - nicht robust genug ist. Der Erfindung liegt ferner die Erkenntnis zugrunde, dass beispielsweise Rastverbindungen ebenfalls zu aufwendig sind, um die Aluminiumplatten an den Gehäuseschalen zu fixieren. Es wurde gefunden, dass beispielsweise mittels Blasformen oder mittels Thermoformen die Fluidstruktur bzw. Fluidleitung in die Gehäusewandung bzw. in den Wandungskörper selbst integriert werden kann. Der Erfindung liegt die Erkenntnis zugrunde, dass hierdurch der Aufwand entscheidend gesenkt wird.

Ferner wurde gefunden, dass durch die Einbettung der Fluidstruktur bzw. Fluidleitung in die Wandung eine starke Verbindung erzielt wird, welche aufwendige Klemm-, Rast- oder Schraubverbindungen überflüssig macht und diese hinsichtlich Dauerhaftigkeit sogar übertrifft. Weiterhin liegt der Erfindung die Erkenntnis zugrunde, dass diese Wandung eine leistungsfähige Temperierung erlaubt. Dies ist insofern überraschend, als dass die Aluminiumplatten aus dem Stand der Technik sehr gute Wärmeleiter sind.

Allerdings - und das ist eine weitere Erkenntnis der Erfindung - sind Kunststoffmaterialien für die Gehäusewandung aufgrund ihrer großen Gestaltungsvielfalt ausreichend thermisch leitfähig, um eine leistungsstarke Temperierung zu erzielen. Insbesondere kann die Fluidleitung nahezu direkt an der Innenseite der Gehäusewandung befindlich sein, so dass die Batteriezellen in einen direkten oder nahezu direkten Kontakt mit der Fluidleitung gelangen. Außerdem kann die Fluidleitung bzw. die Gehäusewandung mit Additiven versehen werden, welche eine größere thermische Leitfähigkeit erlauben. Ferner kann eine isolierende Schicht außerhalb der Fluidleitung dafür sorgen, dass die Kälte bzw. Wärme der Fluidleitung vor allem nach innen dringt. Diese zahlreichen Möglichkeiten führen dazu, dass der Aufwand bei der Herstellung des Batteriegehäuses gesenkt werden kann ohne dabei die Leistungsfähigkeit der Temperierung zu beeinträchtigen. Die eingangs genannte Aufgabe wird im Ergebnis mit dem erfindungsgemäßen Batteriegehäuse gelöst.

Der Begriff "Antriebsbatterie" meint vorzugsweise eine Batterie zum Antreiben eines Elektromotors, der das Fahrzeug beschleunigen kann. Insbesondere sind mit dem Ausdruck "Antriebsbatterie" nicht solche Batterien gemeint, welche lediglich kleinere Elektromotoren wie diejenigen für Anlasser oder Pumpen antreiben. Die Antriebsbatterie ist vorzugsweise eine Energiequelle für einen Elektromotor zum Beschleunigen eines Elektrofahrzeugs oder eines Hybridfahrzeugs.

Die Gehäusewandung ist ein Bestandteil des Batteriegehäuses. Das Batteriegehäuse kann neben der Gehäusewandung weitere, nicht zur Gehäusewandung zählende Elemente aufweisen. Hierzu gehören beispielsweise Verbindungselemente, z. B. Schrauben, oder auch Dichtungselemente wie ein Dichtungsring.

Der Ausdruck "eingebettet" meint bevorzugt, dass in einem Querschnitt der Gehäusewandung wenigstens 1/10 bzw. 1/8 bzw. 1/6 bzw. 1/4 bzw. 1/3 bzw. 1/2 bzw. 2/3 der Ausdehnung der Fluidleitung in Höhenrichtung bzw. z-Richtung von Material der Gehäusewandung umgeben ist und vorzugsweise in Berührung mit diesem Material steht. Vorzugsweise ist das Material der Gehäusewandung formschlüssig und/oder stoffschlüssig mit der Fluidleitung verbunden. Es ist sehr bevorzugt, dass das Material der Gehäusewandung stoffschlüssig mit der Fluidleitung, insbesondere mittels eines thermischen Verfahrens, verbunden ist.

Richtungen werden vorteilhafterweise über das kartesische Koordinatensystem ausgedrückt. Es ist bevorzugt, dass sich die x-Richtung der größten Ausdehnung des Batteriegehäuses bzw. der Antriebsbatterie entspricht. Die z-Richtung entspricht bevorzugt der geringsten Ausdehnung des Batteriegehäuses. Die Richtung senkrecht zur z- und x-Richtung ist zweckmäßigerweise die y-Richtung. In diesem Ausführungsbeispiel entspricht die z-Richtung der Höhenrichtung der eingebauten Antriebsbatterie im Fahrzeug. Vorteilhafterweise entspricht die x-Richtung der Richtung längs des Fahrzeugs bzw. der Fahrtrichtung.

Die Anordnung von Batteriezellen innerhalb des Batteriegehäuses definiert die Richtungen bzw. Positionsangaben "innen" und "außen". Ist beispielsweise eine Schicht der Gehäusewandung näher als eine andere Schicht an den Batteriezellen befindlich, so ist die eine Schicht innerhalb der anderen Schicht angeordnet. Die Begrifflichkeiten "innen" und "außen" sind vorzugsweise auf das gesamte Batteriegehäuse bezogen und nicht etwa auf einen Ausschnitt aus einer Wandung.

Gemäß einer besonders bevorzugten Ausführungsform umfasst die Gehäusewandung eine äußere Schicht und eine innere Schicht. Die Fluidleitung ist bevorzugt wenigstens abschnittsweise und vorzugsweise vollständig in z-Richtung in die innere Schicht - über wenigstens einen Flächenbereich hinweg - eingebettet. Mit Vorteil ist die Fluidleitung lediglich in der inneren Schicht eingebettet. Es ist möglich, dass zwischen der Fluidleitung und der äußeren Schicht ein Klebstoff befindlich ist. Vorzugsweise besteht ein Formschluss zwischen der inneren Schicht und der Fluidleitung. Ganz besonders vorzugsweise liegt ein Stoffschluss zwischen der inneren Schicht und der Fluidleitung vor. Es ist bevorzugt, dass die innere Schicht wenigstens 1 bzw. 2 bzw. 4 bzw. 6 bzw. 8 bzw. 10 bzw. 12 bzw. 14 mm eines äußeren Abschnitts der Fluidleitung umschließt. Es ist ganz besonders bevorzugt, dass die Gehäusewandung auf ihrer Innenseite so ausgebildet ist, dass es zu einer flächigen Anlage mit Batteriezellen kommen kann. Dies bewirkt, dass die Fluidleitung besonders nah an Batteriezellen heranreichen kann, wodurch ein guter Wärmeaustausch ermöglicht wird. Eine andere, vorteilhafte Wirkung besteht darin, dass die Fluidleitung von der äußeren Schicht umschlossen wird, wodurch eine entsprechende Stabilität des Batteriegehäuses gewährleistet wird. Dies bewirkt ferner, dass die Fluidleitung auch auf der Innenseite der Gehäusewandung von einem Material abgeschlossen wird, so dass eine besonders zuverlässige bzw. stabile Anordnung der Fluidleitung gegeben ist.

Es ist ganz besonders bevorzugt, dass die Fluidleitung und/oder die äußere Schicht und/oder die innere Schicht einen Kunststoff aufweist/aufweisen. Hierdurch wird ein besonders geringer Herstellungsaufwand mit insbesondere niedrigen Energiekosten erreicht. Darüber hinaus erlaubt das Kunststoffmaterial eine große Gestaltungsfreiheit. Es ist sehr bevorzugt, dass der Kunststoff ein thermoplastischer Kunststoff ist. Vorzugsweise umfasst der Kunststoff der Gehäusewandung bzw. der inneren Schicht bzw. der Fluidleitung ein Additiv zur Erhöhung der thermischen Leitfähigkeit des Kunststoffs der inneren Schicht bzw. der Fluidleitung. Das Additiv umfasst vorzugsweise einen Leitruß. Mit Vorteil beträgt eine Schichtdicke der inneren Schicht wenigstens 1 bzw. 1,5 bzw. 2 bzw. 3 bzw. 4 bzw. 6 bzw. 8 bzw. 10 bzw. 12 bzw. 14 mm. Es ist bevorzugt, dass sich eine Schichtdicke der äußeren Schicht auf wenigstens 2 bzw. 3 bzw. 4 bzw. 6 bzw. 8 bzw. 10 bzw. 12 bzw. 14 mm beläuft.

Gemäß einer besonders bevorzugten Ausführungsform umfasst das Batteriegehäuse bzw. die Gehäusewandung wenigstens zwei Wandungskörper und insbesondere zwei Gehäuseschalen. Mit Vorteil umfasst das Batteriegehäuse bzw. die Gehäusewandung einen unteren Wandungskörper und einen oberen Wandungskörper. Vorteilhafterweise umfasst der untere Wandungskörper eine Seitenwand. Der obere Wandungskörper kann eine Seitenwand aufweisen. Zweckmäßigerweise umfasst der obere Wandungskörper eine Decke. Es ist bevorzugt, dass der untere Wandungskörper einen Boden aufweist. Vorzugsweise werden Verbindungselemente bzw. die Verbindungselemente mit der Seitenwand des unteren Wandungskörpers und/oder mit der Seitenwand des oberen Wandungskörpers verbunden. Es ist bevorzugt, dass die Gehäusewandung lediglich zwei Wandungskörper umfasst, so dass nach einem Verbinden des unteren Wandungskörpers mit dem oberen Wandungskörper die Batteriezellen vollständig eingehaust werden können. Es ist möglich, dass der obere Wandungskörper keine Seitenwand bzw. lediglich eine Decke umfasst. Zweckmäßigerweise sind der obere Wandungskörper und der untere Wandungskörper reversibel miteinander verbunden bzw. verbindbar. Mit Vorteil umfasst das Batteriegehäuse eine Dichtung. Die Dichtung umfasst vorteilhafterweise einen Dichtungsring. Die Dichtung bzw. der Dichtungsring ist bevorzugt zwischen dem unteren Wandungskörper und dem oberen Wandungskörper angeordnet. Vorzugsweise ist die Dichtung wenigstens teilweise und mit Vorteil vollständig entlang einer/der Seitenwand des unteren Wandungskörpers entlang laufend ausgebildet. Der Dichtungsring umfasst zweckmäßigerweise ein Elastomer. Die Dichtung kann eine Dichtungsnut in dem oberen und/oder in dem unteren Wandungskörper aufweisen, in welche zweckmäßigerweise der Dichtungsring eingesetzt ist.

Gemäß einer sehr bevorzugten Ausführungsform umfasst die Fluidleitung wenigstens eine Biegung. Die wenigstens eine Biegung der Fluidleitung ist vorzugsweise in der Gehäusewandung bzw. in der inneren Schicht wenigstens teilweise und bevorzugt vollständig eingebettet. Es ist bevorzugt, dass die Fluidleitung mehrere Biegungen aufweist. Besonders vorzugsweise verläuft die Fluidleitung wenigstens abschnittsweise mäanderförmig. Es ist bevorzugt, dass die Fluidleitung wenigstens einen und vorzugsweise mehrere gerade verlaufende Abschnitte umfasst. Es ist von Vorteil, dass der wenigstens eine gerade verlaufende Abschnitt der Fluidleitung in der Gehäusewandung bzw. in der inneren Schicht wenigstens teilweise und bevorzugt vollständig eingebettet ist. Mit Vorteil beläuft sich ein Außendurchmesser der Fluidleitung auf höchstens 40 bzw. 30 bzw. 25mm. Vorzugsweise beträgt ein Außendurchmesser der Fluidleitung wenigstens 8 bzw. 10 bzw. 12mm. Es ist bevorzugt, dass ein Innendurchmesser der Fluidleitung wenigstens 6 bzw. 8 bzw. 10mm beträgt. Vorteilhafterweise beläuft sich ein Innendurchmesser auf höchstens 35 bzw. 25 bzw. 20mm.

Vorzugsweise ragt ein erstes Ende und/oder ein zweites Ende der Fluidleitung aus der Gehäusewandung nach innen hervor. Es ist zweckmäßig, dass das Batteriegehäuse ein erstes Anschlussrohr umfasst. Vorzugsweise verbindet das erste Anschlussrohr das erste Ende der Fluidleitung mit einem/dem ersten Fluidanschluss des Batteriegehäuses. Mit Vorteil umfasst das Batteriegehäuse ein zweites Anschlussrohr. Das zweite Anschlussrohr verbindet zweckmäßigerweise das zweite Ende der Fluidleitung mit einem/dem zweiten Fluidanschluss des Batteriegehäuses.

Es ist sehr bevorzugt, dass das Batteriegehäuse bzw. die Gehäusewandung wenigstens einen ersten Fluidanschluss und vorzugsweise einen zweiten Fluidanschluss umfasst. Der erste und/oder zweite Fluidanschluss ist vorzugsweise als Steckelement, insbesondere als Stecker oder Buchse, ausgebildet. Weiter vorzugsweise ist der erste Fluidanschluss und/oder der zweite Fluidanschluss ausgebildet, um eine fluidische Verbindung und eine mechanische Sicherung durch lediglich einen Steckvorgang mit dem Anschlussrohr und/oder mit Rohrleitungen außerhalb des Batteriegehäuses herzustellen. Der erste Fluidanschluss und/oder zweite Fluidanschluss ist zweckmäßigerweise Bestandteil einer Schnellkupplung. Der erste Fluidanschluss und/oder der zweite Fluidanschluss ragt vorzugsweise gegenüber der Gehäusewandung nach außen vor. Mit Vorteil ist der erste Fluidanschluss mit einer ersten Öffnung in der Gehäusewandung - insbesondere stoffschlüssig - verbunden und vorzugsweise in die erste Öffnung eingesetzt. Mit Vorteil ist der zweite Fluidanschluss mit einer zweiten Öffnung in der Gehäusewandung - insbesondere stoffschlüssig - verbunden und vorzugsweise in die zweite Öffnung eingesetzt.

Es ist sehr bevorzugt, dass das erste Anschlussrohr das erste Ende der Fluidleitung mit dem ersten Fluidanschluss verbindet. Zweckmäßigerweise verbindet das zweite Anschlussrohr das zweite Ende der Fluidleitung mit dem zweiten Fluidanschluss. Mit Vorteil umfasst der erste Fluidanschluss und/oder der zweite Fluidanschluss ein äußeres Steckelement, welches gegenüber der Gehäusewandung nach außen ragt und/oder ein inneres Steckelement, welches gegenüber der Gehäusewandung nach innen ragt.

Gemäß einer bevorzugten Ausführungsform umfasst das Material der Gehäusewandung bzw. der inneren Schicht und/oder der äußeren Schicht Fasern. Die Fasern umfassen vorzugsweise Glasfasern. Es ist bevorzugt, dass der Anteil der Fasern an dem Material der inneren Schicht und/oder der äußeren Schicht wenigstens 5 bzw. 10 bzw. 15 bzw. 20 Gew.-% beträgt. Mit Vorteil umfasst das Material der inneren Schicht und/oder das Material der äußeren Schicht ein Flammschutzmittel. Das Flammschutzmittel genügt mit Vorteil wenigstens der Kategorie V2 der Norm UL 94. Mit Vorteil weist das Material der ersten Schicht und/oder der zweiten Schicht ein Polyolefin und insbesondere ein Polypropylen auf.

Eine Antriebsbatterie umfasst vorzugsweise ein erfindungsgemäßes Batteriegehäuse sowie Batteriezellen. Mit Vorteil weist die Antriebsbatterie wenigstens eine elektrische bzw. elektronische Komponente auf. Die wenigstens eine elektrische bzw. elektronische Komponente kann eine Steuerungseinrichtung, ein Sensor oder eine elektrische Verbindung sein.

Die eingangs genannte Aufgabe wird gelöst durch die Verwendung eines erfindungsgemäßen Batteriegehäuses für eine Antriebsbatterie bzw. durch eine Verwendung einer erfindungsgemäßen Antriebsbatterie in einem Elektrofahrzeug bzw. Hybridfahrzeug.

Die eingangs genannte Aufgabe wird gelöst durch ein Verfahren zur Herstellung eines Batteriegehäuses und insbesondere eines erfindungsgemäßen Batteriegehäuses, wobei in einer Form zur Ausformung eines Teils des Batteriegehäuses bzw. einer Gehäusewandung bzw. eines Wandungskörpers eine Fluidleitung eingelegt wird, wobei dann ein Material einer Gehäusewandung bzw. eines Wandungskörpers zur Einbettung der Fluidleitung in die Gehäusewandung bzw. des Wandungskörpers in die Form eingebracht wird.

Das Verfahren zur Herstellung des Batteriegehäuses umfasst vorzugsweise einen Blasform-Vorgang und/oder einen Thermoform-Vorgang. Es ist bevorzugt, dass eine/die äußere Schicht und/oder die innere Schicht der Gehäusewandung bzw. des Wandungskörpers mittels Blasformen oder mittels Thermoformen hergestellt wird.

Mit Vorteil wird dann die Fluidleitung in die Form bzw. in die Gehäusewandung bzw. in den Wandungskörper eingebracht bzw. auf einer Innenseite der äußeren Schicht angeordnet. Es ist sehr bevorzugt, dass der Wandungskörper einen Boden bzw. eine Decke und eine Seitenwand umfasst. Vorzugsweise wird nach dem Einlegen bzw. dem Anordnen der Fluidleitung auf einer Innenseite der äußeren Schicht des Wandungskörpers bzw. der Gehäusewandung eine/die innere Schicht mittels Blasformen oder mittels Thermoformen auf der Innenseite der äußeren Schicht aufgebracht.

Zwei Ausführungsbeispiele der Erfindung werden nachfolgend anhand von mehreren Figuren erläutert. Es zeigen schematisch
- Figur 1: eine Explosionsansicht einer Antriebsbatterie mit einem erfindungsgemäßen Batteriegehäuse,
- Figur 2: eine Draufsicht auf einen Ausschnitt eines Bodens eines unteren Wandungskörpers des Batteriegehäuses,
- Figur 3: einen Querschnitt durch den Ausschnitt von Figur 2,
- Figuren 4A-F: eine Abfolge von Verfahrensschritten eines ersten Verfahrensbeispiels und
- Figuren 5A-F: eine Abfolge von Verfahrensschritten eines zweiten Verfahrensbeispiels.

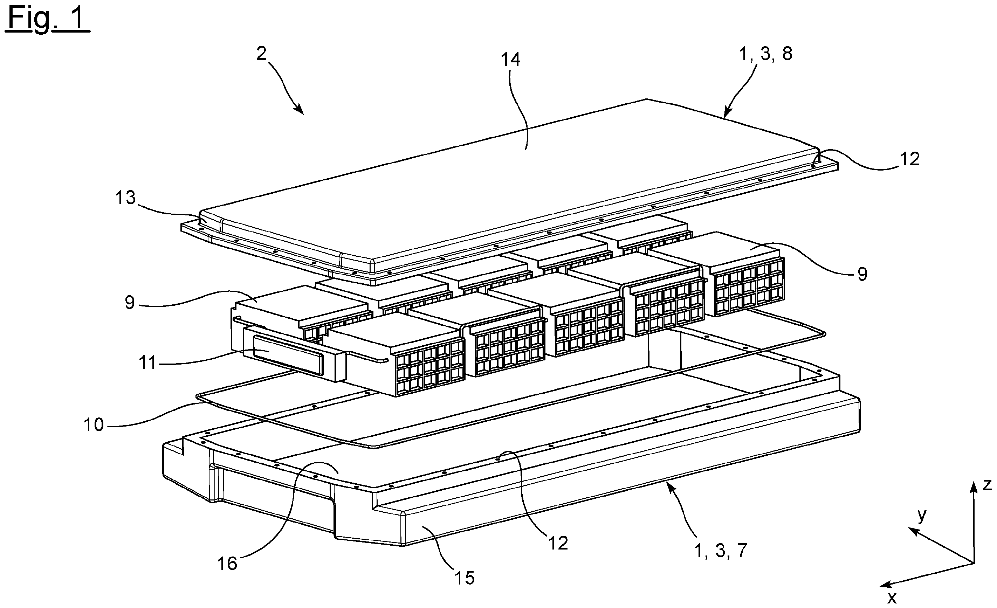

In Figur 1 ist eine Antriebsbatterie 2 eines Elektrofahrzeugs gezeigt. Zweckmäßigerweise dient die Antriebsbatterie 2 der Bereitstellung von elektrischer Energie zum Antreiben eines Elektromotors, der das Elektrofahrzeug beschleunigen kann. Die Antriebsbatterie 2 umfasst zweckmäßigerweise ein Batteriegehäuse 1 sowie eine Mehrzahl an Batteriezellen 9. Außerdem können mehrere elektrische bzw. elektronische Komponenten 11 innerhalb des Batteriegehäuses 1 angeordnet sein. Hierzu gehören neben elektrischen Verbindungen der Batteriezellen 9 beispielsweise auch elektronische Steuereinheiten und Sensoren.

Richtungen werden ausweislich Figur 1 vorteilhafterweise über das kartesische Koordinatensystem ausgedrückt. Es ist bevorzugt, dass sich die x-Richtung an der Richtung mit der größten Ausdehnung des Batteriegehäuses 1 bzw. der Antriebsbatterie 2 in einer Richtung orientiert. Die z-Richtung entspricht bevorzugt der Richtung mit der geringsten Ausdehnung des Batteriegehäuses 1. Die Richtung senkrecht zur z- und x-Richtung ist zweckmäßigerweise die y-Richtung. In diesem Ausführungsbeispiel entspricht die z-Richtung der Höhenrichtung der eingebauten Antriebsbatterie im Fahrzeug. Vorteilhafterweise entspricht die x-Richtung der Längsrichtung des Fahrzeugs bzw. der Fahrtrichtung.

Das Batteriegehäuse 1 umfasst gemäß Figur 1 eine Gehäusewandung 3 und zweckmäßigerweise eine Mehrzahl an Verbindungselementen 12. Die Verbindungselemente 12 sind bevorzugt Schrauben. Das Batteriegehäuse 1 bzw. die Gehäusewandung 3 umfasst vorzugsweise zwei Wandungskörper 7, 8. Vorzugsweise ist das Batteriegehäuse 1 bzw. die Gehäusewandung 3 in z-Richtung in die zwei Wandungskörper 7, 8 unterteilt. Es ist bevorzugt, dass einer der beiden Wandungskörper 7, 8 ein unterer Wandungskörper 7 ist. Mit Vorteil ist der andere der beiden Wandungskörper 7, 8 der obere Wandungskörper 8. Die Wandungskörper 7, 8 sind mit Vorteil über die Verbindungselemente 12 miteinander verbunden bzw. verbindbar. Die Verbindungselemente 12 weisen bevorzugt Schrauben auf.

Das Batteriegehäuse 1 umfasst zweckmäßigerweise eine Dichtung, s. Figur 1. Die Dichtung weist mit Vorteil einen Dichtungsring 10 auf, welcher vorzugsweise zwischen dem unteren Wandungskörper 7 und dem oberen Wandungskörper 8 angeordnet ist. Bevorzugt weist der untere Wandungskörper 7 und/oder der obere Wandungskörper 8 bzw. die Dichtung eine Dichtungsnut auf, in welche der Dichtungsring 10 einsetzbar bzw. eingesetzt ist.

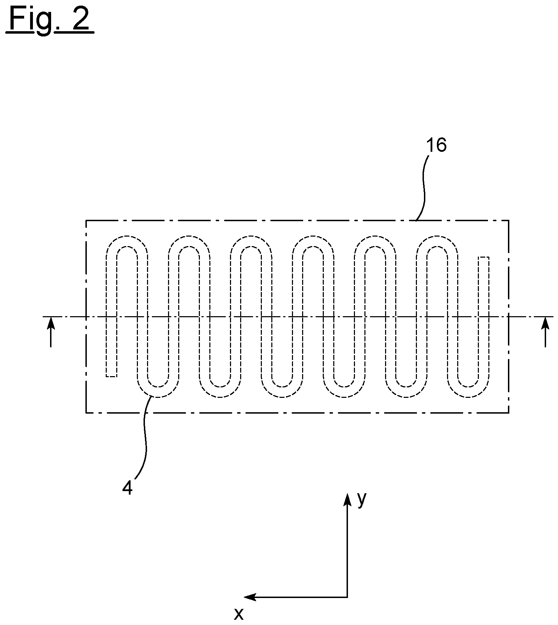

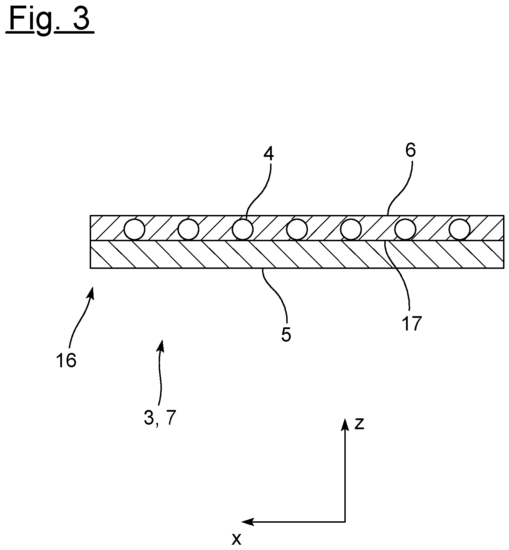

Bevorzugt ist der untere Wandungskörper 7 und/oder der obere Wandungskörper 8 gemäß Figur 1 als Gehäuseschale ausgebildet. Der untere Wandungskörper 7 weist mit Vorteil eine wenigstens abschnittsweise umlaufende Seitenwand 15 auf. Bevorzugt umfasst der untere Wandungskörper 7 einen Boden 16. Zweckmäßigerweise umfasst der obere Wandungskörper 8 eine wenigstens abschnittsweise umlaufende Seitenwand 13. Es ist bevorzugt, dass der untere Wandungskörper 7 einen Boden 16 bzw. der obere Wandungskörper 8 eine Decke 14 aufweist. Der obere Wandungskörper 8 bildet vorteilhafterweise einen Deckel für den unteren Wandungskörper 7. Zweckmäßigerweise sind die Batteriezellen 9 zwischen dem unteren Wandungskörper 7 und dem oberen Wandungskörper 8 angeordnet. Temperierelemente und insbesondere eine Fluidleitung 4 (siehe insbesondere Figuren 2 und 3) des Batteriegehäuses 1 bzw. der Antriebsbatterie 2 sind in Figur 1 der Übersichtlichkeit halber weggelassen worden.

In Figur 2 ist eine Draufsicht auf einen Ausschnitt des Bodens 16 des unteren Wandungskörpers 7 abgebildet. Insbesondere ist in Figur 2 die Seitenwand 15 des unteren Wandungskörpers 7 nicht gezeigt. In diesem Ausführungsbeispiel ist eine Fluidleitung 4 in den Boden 16 des unteren Wandungskörpers 7 eingebettet und vorzugsweise mit bloßem Auge nicht ohne weiteres sichtbar. Aus diesem Grunde ist die Fluidleitung 4 in Figur 2 lediglich gestrichelt dargestellt. Die Fluidleitung 4 ist bevorzugt mäanderförmig bzw. als Temperierschlange ausgebildet.

Mit Vorteil umfasst der obere Wandungskörper 8 eine hier nicht dargestellte Fluidleitung, welche vorzugsweise mäanderförmig ausgebildet ist. Es ist bevorzugt, dass die Fluidleitung des oberen Wandungskörpers 8 in die Decke 14 des oberen Wandungskörpers 8 eingebettet ist.

Die gestrichelte Linie längs des in Figur 2 gezeigten Ausschnitts definiert den in Figur 3 gezeigten Querschnitt durch den Boden 16 des unteren Wandungskörpers 7. Vorzugsweise umfasst die Gehäusewandung 3 bzw. der untere Wandungskörper 7 und/oder der obere Wandungskörper 8 eine äußere Schicht 5 und eine innere Schicht 6. Es ist bevorzugt, dass die Fluidleitung 4 in die innere Schicht 6 des unteren Wandungskörpers 7 und/oder des oberen Wandungskörpers 8 wenigstens teilweise und bevorzugt vollständig eingebettet ist.

Zweckmäßigerweise ist eine Grenzfläche 17 zwischen der äußeren Schicht 5 und der inneren Schicht 6 des unteren Wandungskörpers 7 bzw. des oberen Wandungskörpers 8 befindlich. Die Grenzfläche 17 des unteren Wandungskörpers 7 bzw. des oberen Wandungskörpers 8 ist vorzugsweise eine Grenzfläche, an welcher die äußere Schicht 5 und die innere Schicht 6 einen Stoffschluss gebildet haben. Der Stoffschluss in diesem Ausführungsbeispiel kommt vorzugsweise dadurch zustande, dass wenigstens eine der beiden Schichten, insbesondere die innere Schicht 6, in einem erwärmten Zustand auf die andere Schicht, insbesondere auf die äußere Schicht 5, aufgetragen wird.

In diesem Ausführungsbeispiel weist die Fluidleitung 4 des unteren Wandungskörpers 7 und/oder des oberen Wandungskörpers 8 einen Außendurchmesser von 18 mm und einen Innendurchmesser von 16 mm auf. Die Fluidleitung 4 des unteren Wandungskörpers 7 und/oder des oberen Wandungskörpers 8 umfasst vorzugsweise einen Kunststoff und insbesondere einen thermoplastischen Kunststoff. Mit Vorteil ist die Fluidleitung 4 mittels Extrusion hergestellt. Die Fluidleitung 4 weist vorzugsweise ein Polypropylen auf.

Es ist bevorzugt, dass die äußere Schicht 5 und/oder die innere Schicht 6 des unteren Wandungskörpers 7 und/oder des oberen Wandungskörpers 8 ein Polypropylen aufweist. Vorzugsweise umfasst die äußere Schicht 5 und/oder die innere Schicht 6 des unteren Wandungskörpers 7 und/oder des oberen Wandungskörpers 8 ein Verstärkungsmaterial, weiter vorzugsweise Fasern und besonders vorzugsweise Glasfasern. Vorteilhafterweise beträgt der Anteil des Verstärkungsmaterials in der äußeren Schicht 5 bzw. in der inneren Schicht 6 wenigstens 25 %. Es ist bevorzugt, dass die äußere Schicht 5 und/oder die innere Schicht 6 ein Flammschutzmittel aufweist/aufweisen.

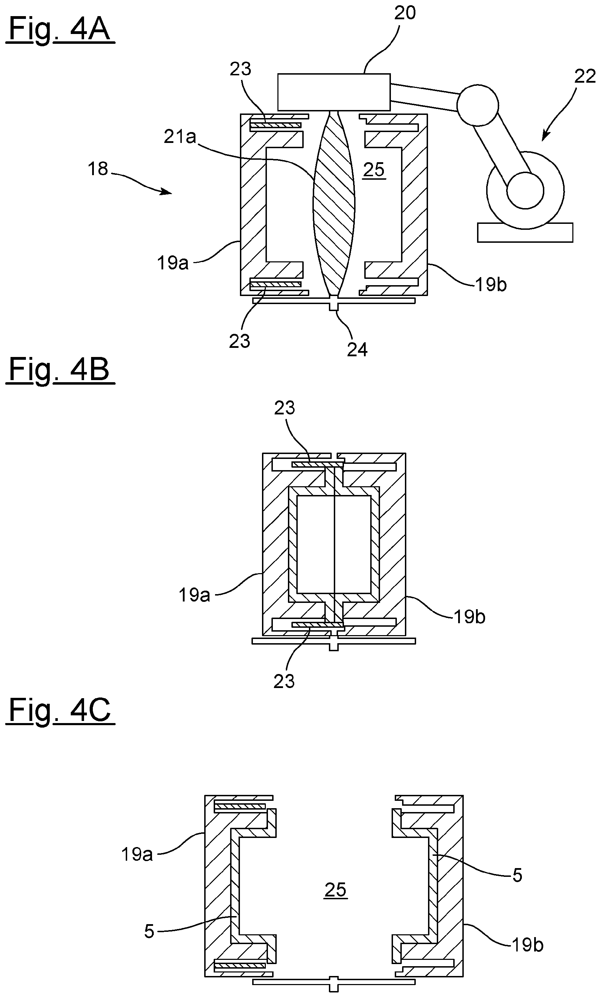

In den Figuren 4A bis 4F ist eine Abfolge von Verfahrensschritten eines ersten, beispielhaften Herstellungsverfahrens für das Batteriegehäuse 1 bzw. die Gehäusewandung 3 bzw. den unteren Wandungskörper 7 bzw. den oberen Wandungskörper 8 gezeigt. Besonders vorzugsweise ist das Herstellungsverfahren des ersten Ausführungsbeispiels ein Blasform-Verfahren.

Gemäß dem ersten Ausführungsbeispiel bzw. Figur 4A umfasst eine Herstellungsvorrichtung 18 zur Herstellung eines Batteriegehäuses eine erste Form 19a sowie eine zweite Form 19b, welche vorzugsweise relativ zueinander beweglich sind und bevorzugt aufeinander zu beweglich sind. Die Bewegungsrichtung ist vorteilhafterweise horizontal. Zweckmäßigerweise definieren die erste Form 19a und die zweite Form 19b zwischen sich eine variable Kavität 25.

Es ist bevorzugt, dass ein erster Rohling 21a - zweckmäßigerweise mittels einer Rohlingszuführung 20 - in die Kavität 25 eingeführt wird. Vorzugsweise umfasst die Herstellungsvorrichtung 18 einen Roboter 22. Der Roboter 22 ist zweckmäßigerweise so ausgebildet, dass er die Rohlingszuführung 20 so bewegt, dass der erste Rohling 21a in die Kavität 25 eingeführt wird. Mit Vorteil ist die Rohlingszuführung 20 an dem Roboter 22 bzw. an einem Ende des Roboters 22 angeordnet. Es ist bevorzugt, dass die Herstellungsvorrichtung 18 eine Blaseinrichtung 24 umfasst. Die Blaseinrichtung 24 ist mit Vorteil so ausgebildet, dass ein mit Druck beaufschlagtes Gas, insbesondere Druckluft, in den ersten Rohling 21a eintreten und den, zweckmäßigerweise erwärmten, ersten Rohling 21a aufblasen kann.

In Figur 4B sind die Formen 19a und 19b gegenüber Figur 4A aufeinander zu bewegt worden, so dass die Kavität 25 geschlossen wurde. Dann wird zweckmäßigerweise der erste Rohling 21a aufgeblasen, bis der erste Rohling 21a die Kontur der Kavität 25 bzw. der Innenseite der ersten Form 19a und der zweiten Form 19b im geschlossenen Zustand angenommen hat. Vorzugsweise wird, sobald der erste Rohling 21a aufgrund Abkühlung wenigstens zum Teil erstarrt ist, eine Trennvorrichtung 23 durch den aufgeblasenen und erstarrten ersten Rohling 21a bewegt. Die Trennvorrichtung 23 bewegt sich mit Vorteil zwischen den Formen 19a, 19b. Hierdurch entstehen bevorzugt zwei Körper bzw. Schalen mit jeweils einer äußeren Schicht 5.

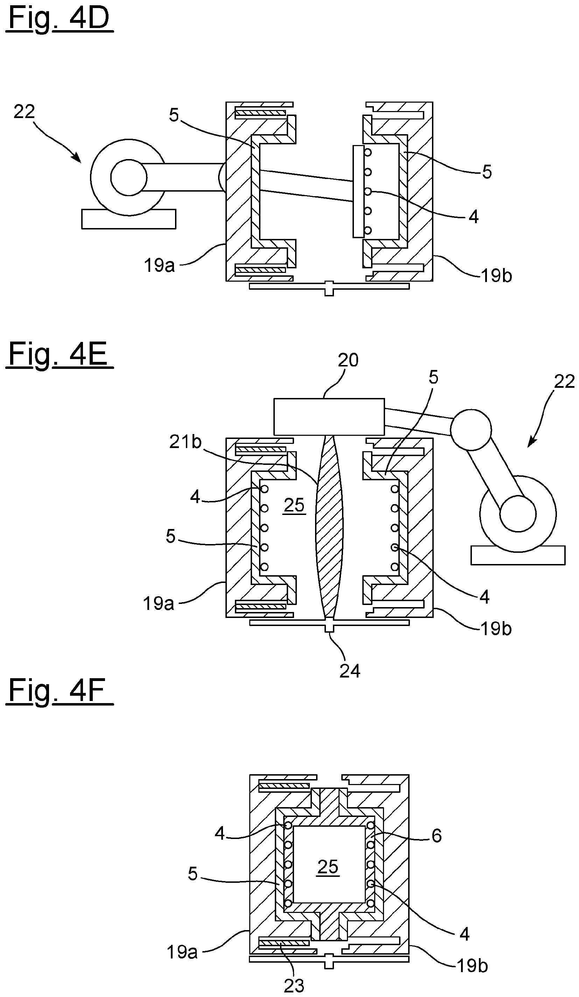

Danach werden gemäß Figur 4C vorzugsweise die Formen 19a und 19b auseinandergefahren, um die Kavität 25 zu vergrößern. Dann wird vorzugsweise ausweislich der Figuren 4D und 4E wenigstens eine Fluidleitung 4 und vorzugsweise je Körper/Schale/Form bzw. äußerer Schicht 5 jeweils eine Fluidleitung 4 in die Kavität 25 eingebracht. Mit Vorteil wird die wenigstens eine Fluidleitung 4 mithilfe eines/des Roboters 22 in die Kavität 25 eingebracht. Zweckmäßigerweise wird die wenigstens eine Fluidleitung 4 auf einer Innenseite einer äußeren Schicht 5 platziert. Besonders vorzugsweise wird auf der jeweiligen Innenseite der beiden Schichten 5 bzw. Schalen/Körper jeweils eine Fluidleitung 4 platziert. Die Platzierung der Fluidleitung 4 kann durch Adhäsion unterstützt werden. Es ist möglich, dass ein Klebstoff zwischen der Fluidleitung 4 und der Schale bzw. äußeren Schicht 5 befindlich ist. Hierzu kann der Roboter die Fluidleitung 4 vor Einbringung in die Kavität 25 mit Klebstoff benetzen.

Es ist bevorzugt, dass die Herstellungsvorrichtung 18 bzw. ein/der Roboter 22 mit einer/der Rohlingszuführung 20 einen zweiten Rohling 21b in die Kavität 25 einbringt, s. Figur 4E. Zweckmäßigerweise werden die beiden Formen 19a und 19b dann aufeinander zubewegt, um die Kavität 25 zu schließen.

Es ist von Vorteil, dass danach eine/die Blaseinrichtung 24 ein mit Druck beaufschlagtes Gas in den zweiten Rohling 21b einbläst, wodurch der zweite, zweckmäßigerweise erwärmte, Rohling 21b sich ausdehnt, s. Figur 4F. Besonders vorzugsweise bettet der zweite Rohling 21b die wenigstens eine Fluidleitung 4 bzw. die zwei Fluidleitungen 4 in sich ein. Es ist bevorzugt, dass nach Erstarren des zweiten Rohlings 21b aus dem zweiten Rohling 21b eine innere Schicht 6 geworden ist, in welche die Fluidleitung 4 bzw. die Fluidleitungen 4 eingebettet ist/sind.

Danach durchtrennt bevorzugt die Trennvorrichtung 23 in diesem ersten Ausführungsbeispiel den erstarrten Körper 5, 6 (hier nicht dargestellt) entlang einer Schnittrichtung vorzugsweise analog zu Figur 4B. Im Ergebnis liegen zwei Wandungskörper 7, 8 vor. Es ist möglich, dass nach dem Trennvorgang durch die Trennvorrichtung 23 ein unterer Wandungskörper 7 sowie ein oberer Wandungskörper 8 vorliegen. Nach dem Trennvorgang mit der Trennvorrichtung 23 können zwei untere Wandungskörper 7 oder zwei obere Wandungskörper 8 vorliegen.

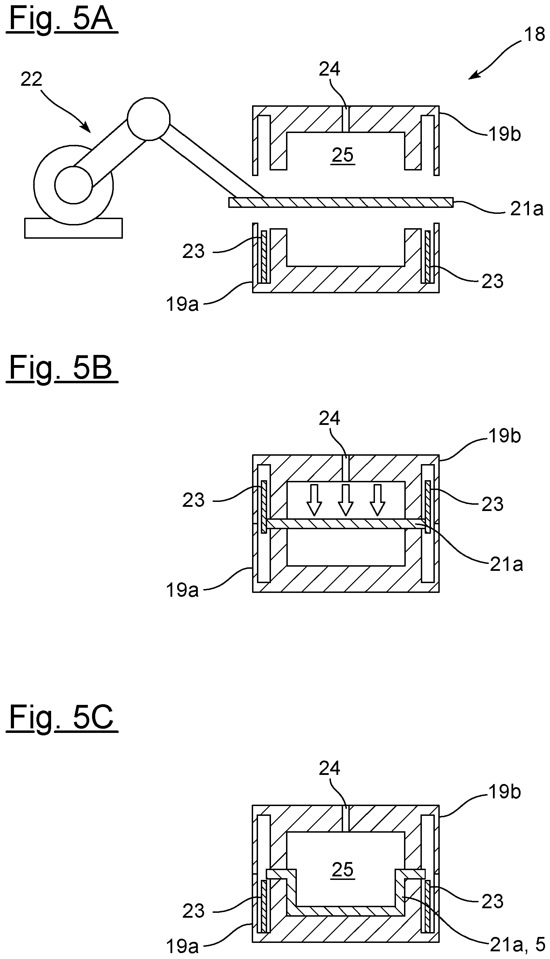

Ein zweites Ausführungsbeispiel zur Herstellung eines Batteriegehäuses 1 bzw. einer Gehäusewandung 3 ist in den Figuren 5A bis 5F gezeigt. Eine Herstellungsvorrichtung 18 ist vorzugsweise als Thermoform-Vorrichtung ausgebildet und umfasst eine erste Form 19a sowie vorzugsweise eine zweite Form 19b. In diesem Ausführungsbeispiel ist die zweite Form 19b jedoch nicht für die herzustellenden Produkte formgebend, wie dies nachfolgend noch erläutert wird.

Die Herstellungsvorrichtung 18 des zweiten Ausführungsbeispiels umfasst bevorzugt eine Trennvorrichtung 23, welche in Höhenrichtung beweglich sein kann. Es ist bevorzugt, dass die Herstellungsvorrichtung 18 des zweiten Ausführungsbeispiels einen Roboter 22 aufweist. Der Roboter 22 ist vorzugsweise dazu ausgebildet, einen ersten Rohling 21a in eine Kavität 25 zwischen der ersten Form 19a und der zweiten Form 19b einzubringen. Im Unterschied zu dem ersten Ausführungsbeispiel ist der erste Rohling 21a des zweiten Ausführungsbeispiels vorzugsweise als starre Platte ausgebildet und nicht als hohler bzw. gewölbter Vorformling.

Zweckmäßigerweise nach dem Einbringen des ersten Rohlings 21a in die Kavität 25 werden die erste Form 19a und die zweite Form 19b aufeinander zubewegt, so dass die Kavität 25 geschlossen wird. Es ist möglich, dass die erste Form 19a und die zweite Form 19b sich in Höhenrichtung aufeinander zu bewegen. Die erste Form 19a kann unterhalb der zweiten Form 19b angeordnet sein. Zweckmäßigerweise wird der erste Rohling 21a zwischen der ersten Form 19a und der zweiten Form 19b eingeklemmt. Mit Vorteil wird dann die Trennvorrichtung 23 betätigt, so dass Ränder des ersten Rohlings 21a abgeschnitten werden können.

Es ist bevorzugt, dass die Herstellungsvorrichtung 18 bzw. die zweite Form 19b eine Blaseinrichtung 24 aufweist. Die Blaseinrichtung 24 umfasst vorzugsweise eine Düse, welche ein mit Druck beaufschlagtes Gas in die Kavität 25 einbläst.

Hierdurch entsteht ein Druck in einem oberen Bereich der Kavität 25. Mit Vorteil wird die Kavität 25 bzw. der erste Rohling 21a mit Wärme beaufschlagt. Vorzugsweise führen die Beaufschlagung des ersten Rohlings 21a mit Wärme und mit Gasdruck dazu, dass der erste Rohling 21a die Kontur der ersten Form 19a annimmt, s. Figur 5C. Es ist bevorzugt, dass der verformte erste Rohling 21a der äußeren Schicht 5 von einem Wandungskörper 7, 8 entspricht.

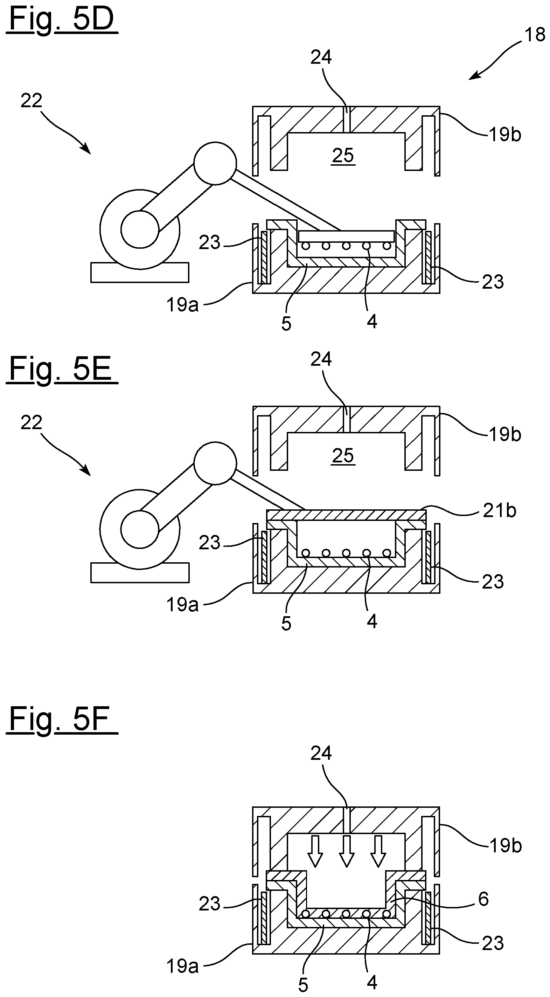

Vorzugsweise werden die Formen 19a, 19b dann auseinandergefahren, so dass die Kavität 25 geöffnet wird, s. Figur 5D. Zweckmäßigerweise führt ein/der Roboter 22 dann eine Fluidleitung 4 in die Kavität 25 ein, so dass die Fluidleitung 4 auf einer Innenseite der äußeren Schicht 5 anliegt, wie dies in Figur 5D gezeigt ist.

Mit Vorteil führt ein/der Roboter 22 dann einen zweiten Rohling 21b in die Kavität 25 ein, s. Figur 5E. Der zweite Rohling 21b ist vorzugsweise als starre Platte ausgebildet. Der erste Rohling 21a und/oder der zweite Rohling 21b kann an die Ausdehnung der ersten Form 19a angepasst sein, so dass es einer Trennvorrichtung an der Form 19a nicht zwingend bedarf.

Zweckmäßigerweise werden danach die Formen 19a und 19b aufeinander zubewegt, bis die Kavität 25 geschlossen ist. Dann wird mit Vorteil der zweite Rohling 21b mit Wärme beaufschlagt. Zweckmäßigerweise wird der zweite Rohling 21b mit einem unter Druck stehenden Gas über die Blaseinrichtung 24 mit einem Druck beaufschlagt, wie dies über die Pfeile in Figur 5F symbolisiert ist. Im Ergebnis nimmt der zweite Rohling 21b die durch die erste Form 19a bzw. die äußere Schicht 5 bzw. die Fluidleitung 4 vorgegebene Form an. Nach Erstarren liegt ein Wandungskörper, insbesondere ein unterer Wandungskörper 7 oder ein oberer Wandungskörper 8, vor.

### Bezugszeichenliste:

- 1: Batteriegehäuse
- 2: Antriebsbatterie
- 3: Gehäusewandung
- 4: Fluidleitung
- 5: äußere Schicht
- 6: innere Schicht
- 7: unterer Wandungskörper
- 8: oberer Wandungskörper
- 9: Batteriezelle
- 10: Dichtungsring
- 11: elektrische bzw. elektronische Komponente
- 12: Verbindungselement
- 13: Seitenwand von 8
- 14: Decke von 8
- 15: Seitenwand von 7
- 16: Boden von 7
- 17: Grenzfläche
- 18: Herstellungsvorrichtung
- 19a: Erste Form
- 19b: Zweite Form
- 20: Rohlingszuführung
- 21a: Erster Rohling
- 21b: Zweiter Rohling
- 22: Roboter
- 23: Trennvorrichtung
- 24: Blaseinrichtung
- 25: Kavität

## Patentansprüche

1. Batteriegehäuse (1) für eine Antriebsbatterie (2) eines Fahrzeugs, umfassend eine Gehäusewandung (3), wobei die Gehäusewandung (3) einen Kunststoff aufweist, wobei das Batteriegehäuse (1) wenigstens eine Fluidleitung (4) für ein Temperiermittel umfasst,
**dadurch gekennzeichnet, dass**
die Fluidleitung (4) wenigstens zum Teil in der Gehäusewandung (3) eingebettet ist.

2. Batteriegehäuse (1) nach Anspruch 1, wobei die Gehäusewandung (3) eine äußere Schicht (5) und eine innere Schicht (6) umfasst, wobei die Fluidleitung (4) vorzugsweise in die innere Schicht (6) und weiter vorzugsweise lediglich in die innere Schicht (6) eingebettet ist.

3. Batteriegehäuse (1) nach Anspruch 1 oder 2, wobei die Fluidleitung (4) und/oder die äußere Schicht (5) und/oder die innere Schicht (6) einen Kunststoff aufweist,

4. Batteriegehäuse (1) nach einem der Ansprüche 1 bis 3, wobei das Batteriegehäuse (1) bzw. die Gehäusewandung (3) wenigstens zwei Wandungskörper (7, 8), insbesondere zwei Gehäuseschalen, und vorzugsweise einen unteren Wandungskörper (7) und einen oberen Wandungskörper (8), umfasst.

5. Batteriegehäuse (1) nach einem der Ansprüche 1 bis 4, wobei die Fluidleitung (4) wenigstens eine Biegung aufweist und bevorzugt wenigstens abschnittsweise mäanderförmig verläuft.

6. Batteriegehäuse (1) nach einem der Ansprüche 1 bis 5, wobei das Batteriegehäuse (1) bzw. die Gehäusewandung (3) wenigstens einen Fluidanschluss aufweist.

7. Batteriegehäuse (1) nach einem der Ansprüche 1 bis 6, wobei das Material der Gehäusewandung (3) bzw. der inneren Schicht (6) und/oder der äußeren Schicht (5) Fasern, insbesondere Glasfasern, umfasst.

8. Antriebsbatterie (2), umfassend ein Batteriegehäuse (1) nach einem der Ansprüche 1 bis 7, wobei die Antriebsbatterie (2) Batteriezellen (9) aufweist.

9. Verwendung eines Batteriegehäuses (1) gemäß einem der Ansprüche 1 bis 7 für eine Antriebsbatterie (2) bzw. Verwendung einer Antriebsbatterie (2) nach Anspruch 8 in einem Elektrofahrzeug bzw. Hybridfahrzeug.

10. Verfahren zur Herstellung eines Batteriegehäuses (1), insbesondere eines Batteriegehäuses (1) nach einem der Ansprüche 1 bis 7, wobei in einer Form (19a, 19b) zur Ausformung eines Teils des Batteriegehäuses (1) bzw. einer Gehäusewandung (3) bzw. eines Wandungskörpers (7, 8) eine Fluidleitung (4) eingelegt wird, wobei dann ein Material einer Gehäusewandung (3) bzw. eines Wandungskörpers (7, 8) zur Einbettung der Fluidleitung (4) in die Gehäusewandung (3) bzw. des Wandungskörpers (7, 8) in die Form (19a, 19b) eingebracht wird.
